(19) Europäisches Patentamt
European Patent Office
Office européen des brevets

(11) **EP 2 595 056 A1**

(12) **EUROPEAN PATENT APPLICATION**
published in accordance with Art. 153(4) EPC

(43) Date of publication:
**22.05.2013 Bulletin 2013/21**

(51) Int Cl.:
***G06F 9/46*** (2006.01)       ***G06F 9/50*** (2006.01)

(21) Application number: **10854703.5**

(86) International application number:
**PCT/JP2010/061842**

(22) Date of filing: **13.07.2010**

(87) International publication number:
**WO 2012/008019 (19.01.2012 Gazette 2012/03)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(71) Applicant: **Fujitsu Limited**
**Kawasaki-shi, Kanagawa 211-8588 (JP)**

(72) Inventor: **OKANO, Kenji**
**Kawasaki-shi**
**Kanagawa 211-8588 (JP)**

(74) Representative: **HOFFMANN EITLE**
**Patent- und Rechtsanwälte**
**Arabellastrasse 4**
**81925 München (DE)**

(54) **INFORMATION PROCESSING DEVICE, METHOD FOR CONTROLLING INFORMATION PROCESSING DEVICE, AND PROGRAM**

(57)    A configuration is provided that effectively lowers power consumption of an information processing apparatus. In the configuration, plural CPUs are allocated to plural partitions performing information processing, operating frequencies of the plural CPUs are changed such that operating frequencies of the plural CPUs match a mean of the operating frequencies, and a logical CPU is generated and allocated to a partition associated with an excess or a deficiency of a processing capability of the CPU so as to eliminate the excess or the deficiency of the processing capability of the CPU corresponding to an information processing load associated with the partition to which the CPU is allocated, which is caused by the changes of the operating frequencies of the CPUs.

FIG.7

| | | BEFORE RECONFIGURATION | AFTER RECONFIGURATION |
|---|---|---|---|
| PERFORMANCE PER DOMAIN | DOMAIN 0 | 1<br>DETAILS: 3GHz × 1 | 1<br>DETAILS: 2GHz × 1+2GHz × 1/2 |
| | DOMAIN 1 | 1<br>DETAILS: 1GHz × 1 | 1<br>DETAILS: 2GHz × 1/2 |
| POWER CONSUMPTION OF ALL CPUs | | 28<br>DETAILS<br>PHYSICAL CPU 0: 3GHz × 3V²=27<br>PHYSICAL CPU 1: 1GHz × 1V²=1<br>TOTAL POWER CONSUMPTION=27+1 | 16 (16/28=0.57)<br>DETAILS<br>PHYSICAL CPU 0: 2GHz × 2V²=8<br>PHYSICAL CPU 1: 2GHz × 2V²=8<br>TOTAL POWER CONSUMPTION=8+8 |

EP 2 595 056 A1

**Description**

TECHNICAL FIELD

The embodiments discussed herein are related to an information processing apparatus, a control method of the information processing apparatus, and a program.

BACKGROUND ART

There is known in the art a parallel computer having a configuration illustrated below. The parallel computer is configured to store information including a data amount in association with power consumption when a processor performs processing employing an operating frequency and a voltage as parameters. The parallel computer allocates data processing to plural processors and sets operating frequencies and voltages based on the stored information so as to minimize a total amount of power consumption of the plural processors.

Further, there is known in the art a configuration of a processing system having logically sectioned partitions, in which power consumption may be reduced by scheduling power supply and a clock frequency of the processors optionally allocated to the respective partitions.

Moreover, there is known in the art a control method of processors having features noted below. That is, the control method includes measuring progress of a certain task having time limitation and load fluctuation, computing the mean time of the progress per unit of time, and comparing the obtained mean time with a threshold. The method further includes changing the operating frequency or the priority of the processing of the processors based on the comparison result.

In addition, there is disclosed a virtual computing system that may be able to lower power consumption by optimizing a physical CPU to which virtual CPUs are not allocated in an entire computer system.

RELATED ART DOCUMENTS

PATENT DOCUMENT

Patent Document 1 : Japanese Laid-open Patent Publication No. 2006-344162

Patent Document 2: Japanese Laid-open Patent Publication No. 2004-192612

Patent Document 3: Japanese Laid-open Patent Publication No. 2003-337713

Patent Document 4: Japanese Open Patent Publication No. 2009-140157

NON-PATENT DOCUMENT

Non-Patent Document 1 : SOLARIS (TM) OPERATING SYSTEM, HARDWARE VIRTUALIZATION PRODUCT ARCHITECTURE, Chien-Hua Yen, ISV Engineering, chien.yen@sun.com, Sun Blueprints (TM) On-Line - November 2007 (http://www.sun.com/blueprints/1107/820-3703.pdf)
Non-Patent Document 2: SPARC Enterprise, M4000/M5000/M8000/M9000 servers, Dynamic Reconfiguration (DR) Users Guide (http://www.fujitsu.com/downloads/SPARC/manuals/sparc -commonj/mx-drusers-ja-06.pdf)

DISCLOSURE OF INVENTION

PROBLEM TO BE SOLVED BY INVENTION

It is an object of the present invention to provide an information processing apparatus having plural CPUs operating in parallel, which is capable of efficiently reducing power consumption of the plural CPUs.

MEANS FOR SOLVING PROBLEMS

In the information processing apparatus, the plural CPUs are allocated to plural partitions in which information processing is performed, and the operating frequencies of the plural CPUs are changed such that each of the operating frequencies matches the mean of the operating frequencies of the plural CPUs. When capabilities of the CPUs are excessive or deficient compared to information processing load associated with the partitions to which the CPUs are allocated, such excess or deficiency of the capabilities of the CPUs may be eliminated by changing the operating frequencies of the CPUs. In order to eliminate such excess or deficiency of the capabilities of the CPUs, logical CPUs are generated from the CPUs and the generated logical CPUs are allocated to the partitions associated with the excess or deficiency of the capabilities of the CPUs.

EFFECT OF INVENTION

According to the embodiments, the information processing apparatus having the plural CPUs operating in parallel may be capable of efficiently reducing power consumption of the plural CPUs.

BRIEF DESCRIPTION OF DRAWINGS

FIG. 1 is a block diagram illustrating an outline of a server apparatus (an example of an information processing apparatus) according to an embodiment;
FIG. 2 is a block diagram of the server apparatus according to an embodiment;
FIG. 3 is a hardware block diagram of the server apparatus according to an embodiment;
FIG. 4 is a block diagram (part 1) illustrating processing in the server apparatus according to an embodiment;
FIG. 5 is a block diagram (part 2) illustrating processing in the server apparatus according to an embodiment;
FIG. 6 is a block diagram (part 3) illustrating processing in the server apparatus according to an embodiment;
FIG. 7 is a diagram illustrating the difference between before and after the averaging processing of operating frequencies of CPUs in the server apparatus according to an embodiment;
FIG. 8 is a flowchart (part 1) illustrating steps of processing in the server apparatus according to an embodiment;
FIG. 9 is a block diagram (part 4) illustrating processing in the server apparatus according to an embodiment;
FIG. 10 is a block diagram (part 5) illustrating processing in the server apparatus according to an embodiment;
FIG. 11 is a block diagram (part 6) illustrating processing in the server apparatus according to an embodiment;
FIG. 12 is a flowchart (part 1) illustrating steps of processing in the server apparatus according to an embodiment;
FIG. 13 is a block diagram (part 7) illustrating processing in the server apparatus according to an embodiment; and
FIG. 14 is a block diagram (part 8) illustrating processing in the server apparatus according to an embodiment.

BEST MODE FOR CARRYING OUT THE INVENTION

In the following, preferred embodiments of the present invention are described with reference to the accompanying drawings.

FIRST EMBODIMENT

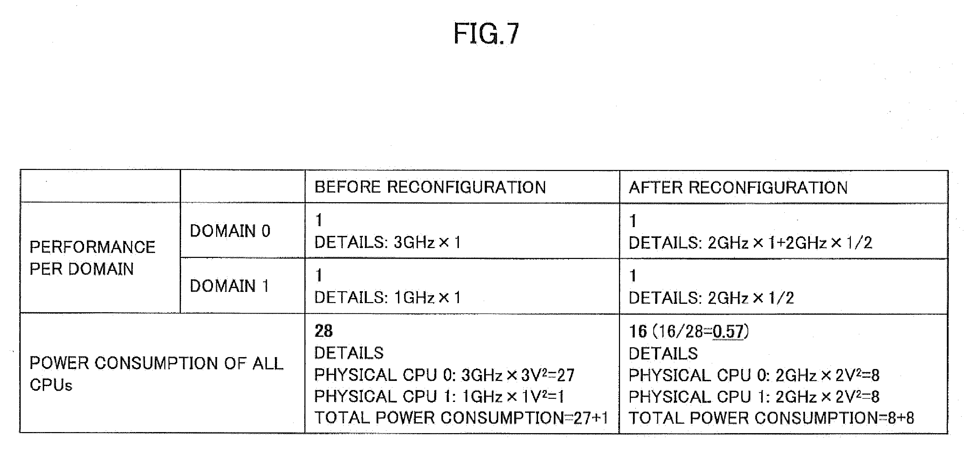

In a multi-processor system according to a first embodiment, after having matched operating frequencies of CPUs, the low load CPU is time-shared to generate plural virtual CPUs. Then, the time-shared virtual CPUs are allocated to logical domains. Accordingly, power consumption of an entire system may be reduced while maintaining the performance of the system by equalizing loads of the CPUs within the system as described above.
Note that in the following description, the virtual CPUs obtained by time-sharing of the CPU as described above are called the "logical CPUs", and the CPUs as hardware are called the "physical CPUs" for convenience of illustration. Further, the "logical domains" are generated such that resources of the system such as memory, the physical CPUs, input/output devices and the like are allocated to respective logical groups (i.e., the logical domains). Details of the logical domains may, for example, be illustrated in Chapter 7 of Non-Patent Document 1. Further, the equalization of loads of the physical CPUs indicates equalization of operating frequencies of the physical CPUs. The power consumption of the entire system may be reduced by equalizing the operating frequencies of the physical CPUs, the reason of which is based upon the idea that the power consumption of the physical CPU is proportional to the cube of its operating frequency as illustrated later with reference to FIG. 7.
A method of cutting the power supply of the unused physical CPU may be given as an example of reducing the power consumption of the multi-processor system. In addition, another method for cutting the power supply of the unused physical CPU may be provided as follows. The physical CPU is time-shared so that this physical CPU may perform numerous processing in an intensive manner. As a result, unused CPUs the power supply of which may be cut are provided. The above methods may be effective where a load of the entire system is low. However, the effectiveness in reducing the power consumption provided by these methods may be limited where the load of the entire system is moderate to high.

According to the first embodiment, operating frequencies of plural CPUs are equalized. As a result, the physical CPU having a low load may be divided to generate logical CPUs, and the generated logical CPUs are allocated to the logical domains having high loads. Accordingly, the power consumption of the entire system may be lowered by efficiently utilizing the physical CPU having a low load.

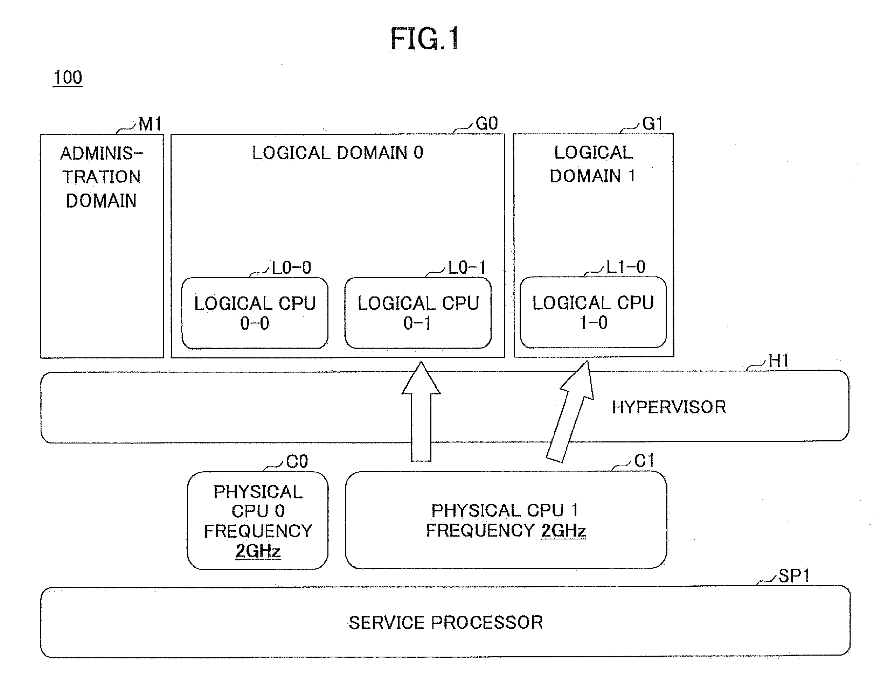

An outline of a server apparatus according to the first embodiment is illustrated with reference to FIG. 1. A server apparatus 100 illustrated in FIG. 1 includes two physical CPUs C0 and C1, a hypervisor H1, and a service processor SP1. The server apparatus 100 of FIG. 1 further includes an administration domain M1, and two logical domains G0 and G1. Further, two logical CPUs L0-0 and L0-1 are allocated to the logical domain G0, and one logical CPU L1-0 is allocated to the logical domain G1.

Each of the physical CPUs C0 and C1 includes respective functions to change an operating frequency (i.e., a clock frequency) and to change a power supply voltage. Note that as described later, the power supply voltage is increased or decreased in proportion to the operating frequencies of the physical CPUs C0 and C1. In the first embodiment, the maximum operating frequency of each of the physical CPUs C0 and C1 is 3 GHz, which may be capable of being changed by 1 GHz per unit.

The logical CPUs L0-0, L0-1, and L1-0 are virtual CPUs generated on the physical CPUs C0 and C1. As described above, the plural logical CPUs may be generated by time-sharing one physical CPU. The time-sharing of the physical CPU is scheduled by the administration domain M1. Migration of register information or the like of the physical CPU is conducted by the hypervisor H1.

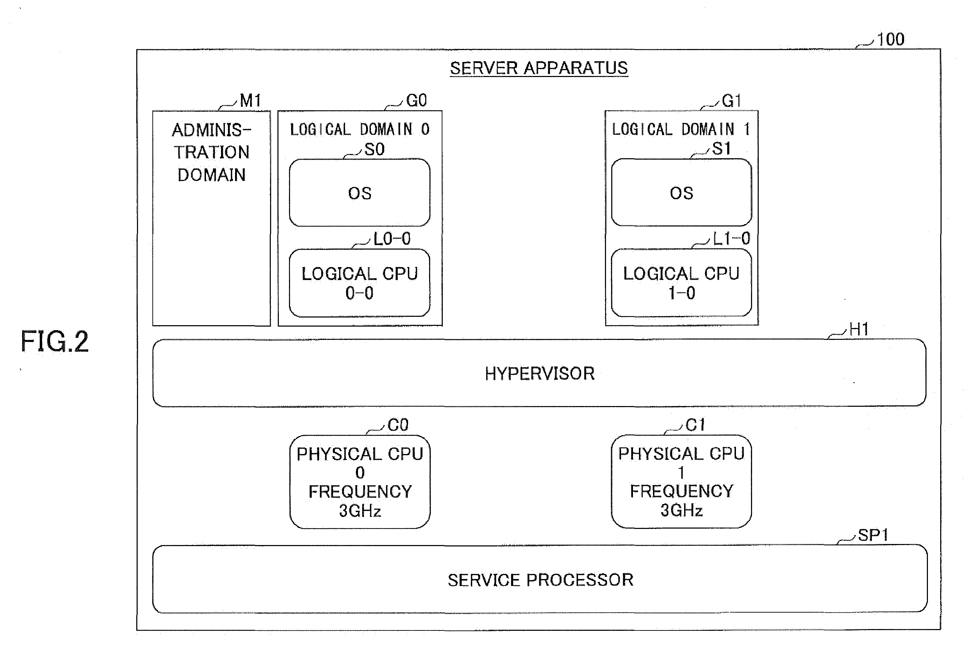

As illustrated later with reference FIG. 2, operating systems (OS) S0 and S1 allocated to the logical domains G0 and G1, respectively, are omitted from FIG. 1. OSs S0 and S1 transmit requests for changing operating frequencies of the logical CPUs belonging to the associated logical domains to the hypervisor H1 according to information processing loads within their respective allocated logical domains. That is, when the load of information processing performed by one logical domain is raised, the OS of that logical domain transmits a request for raising the operating frequency of the logical CPU belonging to the corresponding logical domain. By contrast, when the information processing load is lowered such as when the logical domain is in an idle state, the OS of the logical domain transmits a request for raising the operating frequency of the logical CPU.

The logical CPU L0-0 is generated from the physical CPU C0 by the hypervisor H1, and the logical CPUs L0-1, and L1-0 are generated from the physical CPU C1 by the hypervisor H1.

The hypervisor H1 is software having a function to generate the logical CPUs by converting the physical CPU, and allocate the generated logical CPUs to the respective logical domains (an example of a partition). Further, the hypervisor H1 issues a command to change the operating frequency of the physical CPU based on an instruction from the OS or the administration domain M1, and transmits the command to the physical CPU.

The administration domain M1 is software to manage configurations of the logical domains, dynamically change the configurations of the logical domains, or control the scheduling for allocating to the logical domains the logical CPUs generated by time-sharing the physical CPU. The administration domain M1 has a function to acquire a load average and compute processing capabilities of the logical CPUs necessary for the respective logical domains to perform information processing based on the acquired load average. Note that the load average indicates a ratio of information processing load actually executed by the logical CPU to information processing load suitable for the processing capability of the current operating frequency of the logical CPU. That is, when the information processing load suitable for the processing capability of the current operating frequency of the logical CPU is executed, the load average is 100%. When a half of the suitable information processing load is executed, the load average is 50%.

The administration domain M1 also has a function to dynamically allocate the logical CPUs to the logical domains or cancel the allocation from the logical domains. As a function to dynamically allocate the logical CPUs to the logical domains or cancel the allocation of the logical CPUs from the logical domains, a dynamic reconfiguration (DR) function may be used. Details of the DR function may, for example, be illustrated in Non-Patent Document 2.

The service processor SP1 is an independent computer provided within the server apparatus 100. The service processor SP1 includes a function to monitor the physical CPUs C0 and C1. More specifically, the service processor SP1 includes a function to monitor operating frequencies of the physical CPUs C0 and C1. The service processor SP1 further includes a function to communicate with the administration domain M1 and a function to transmit requests such as changing of the operating frequencies of the physical CPUs C0 and C1, or changing of the allocation of the logical CPUs.

Thus, the server apparatus 100 illustrated in FIG. 1 corresponds to a system that includes the plural physical CPUs C0 and C1, operating frequencies of which may be changeable via the hypervisor H1 of the software, generates the logical CPUs to allocate them to the logical domains, and executes information processing for each of the logical domains. The system may be capable of reducing power consumption of the entire system while maintaining the performance of the system by the following methods.

In the server apparatus 100 of FIG. 1, the power consumption of the entire system may be reduced by equalizing (averaging) the operating frequencies of the physical CPUs. The reason why the above method may be able to reduce the power consumption of the entire system that equalizes the operating frequencies of the physical CPUs is, as described above, based upon the idea that the power consumption of the physical CPUs is proportional to the cube of its operating frequency. Note that when the operating frequencies of the physical CPUs are equalized, the processing capability of the physical CPU may become excessive or deficient corresponding to information processing loads of the logical domains to which the physical CPUs are allocated. In such a case, the physical CPU allocated to the logical domain having low information processing load is time-shared to generate plural logical CPUs, and a part of the processing capability of the corresponding physical CPU is allocated to the logical domain having high load as a logical CPU.

Note that a processing capability of the physical CPU or the logical CPU is proportional to an operating frequency of the physical CPU or the logical CPU. Further, when the operating frequency of the physical CPU is constant, processing capabilities allocated to the respective CPUs generated by time-sharing the physical CPU are proportional to processing times allocated by time-sharing to the logical CPUs.

Each of the hypervisor H1 and the administration domain M1 includes a function to generate plural logical CPUs from one physical CPU, and control allocation of the generated logical CPUs to the logical domains so as to provide processing capabilities necessary for the logical domains to execute information processing.

Further, each of the OSs S0 and S1 requests the hypervisor H1 to change an operating frequency of a corresponding one of the associated logical domains based on the corresponding information processing load.

The service processor SP1 regularly monitors operating frequencies of the physical CPUs, and transmits, when detecting the variability in the operating frequencies of the physical CPUs, an instruction to equalize the operating frequencies of the physical CPUs to the administration domain M1.

According to the example of FIG. 1, one logical CPU L0-0 is generated from the physical CPU C0, and two logical CPUs L0-1, and L1-0 are generated from the physical CPU C1. Then, all the processing capability of the physical CPU C0 is allocated as the logical CPU L0-0 to the logical domain G0 having relatively high information processing load. Further, a part of the processing capability of the physical CPU C1 is allocated as the logical CPU L0-1 to the logical domain G0. By contrast, the other part of the processing capability of the physical CPU C1 is allocated as the logical CPU L1-0 to the logical domain G1 having relatively low information processing load. Thus, the necessary processing capabilities of the logical CPUs are allocated to the logical domain G0 having the high information processing load and the logical domain G1 having the low information processing load, respectively. Further, the operating frequencies of the physical CPUs C0 and C1 are matched as 2 GHz

According to the first embodiment, the two logical CPUs L0-1 and L1-0 are generated by time-sharing the physical CPU C1, and the generated logical CPUs L0-1 and L1-0 are allocated to the two logical domains G0 and G1, respectively. As a result, the processing capabilities necessary for the logical domains G0 and G1 may be provided while matching the operating frequencies of the two physical CPUs C0 and C1. Thus, according to the first embodiment, the power consumption may be reduced while maintaining the performance of the entire system. Further, by equally utilizing the equalized operating frequencies of the physical CPUs, the number of physical CPUs running at the maximum operating frequency may be reduced, and temperatures of the physical CPUs may be leveled, which may increase life-spans of the physical CPUs.

In the following, details of the server apparatus 100 according to the first embodiment are described below with reference to the accompanying drawings. FIG. 2 illustrates an entire configuration of the server apparatus 100 according to the first embodiment. The server apparatus 100 according to the first embodiment includes, as illustrated in FIG. 2, the service processor SP1, the two physical CPUs C0 and C1, the hypervisor H1, the administration domain M1, and the two logical domains G0 and G1. The OSs S0 and S1 are allocated to the logical domains G0 and G1, respectively. FIG. 2 further illustrates a status in which one logical CPU L0-0 is generated from the physical CPU C0 and allocated to the logical domain G0, and one logical CPU L1-0 is generated from the physical CPU C1 and allocated to the logical domain G1.

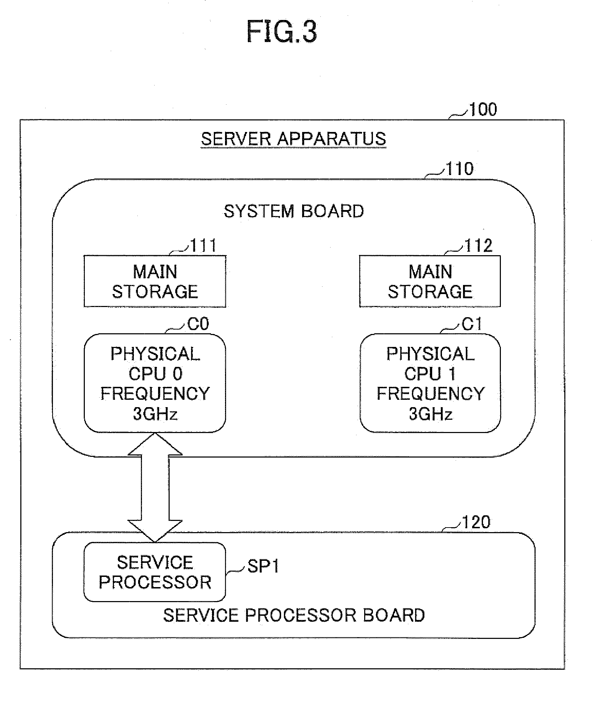

FIG. 3 illustrated a hardware configuration of the server apparatus 100 according to the first embodiment. The server apparatus 100 includes a system board 110, and a service processor board 120. The system board 110 includes the above two physical CPUs C0 and C1, two main storages 111 and 112 allocated to the physical CPUs C0 and C1, respectively. Further, the service processor board 120 includes the service processor SP1. The above logical domains G0 and G1, the hypervisor H1, and the administration domain M1 operate on the physical CPUs C0 and C1, and the main storages 111 and 112 in the system board 110. That is, the logical domains G0 and G1, the hypervisor H1, and the administration domain M1 are implemented by causing the physical CPUs C0 and C1 to retrieve instructions from the main storage 111 or 112, and execute the retrieved instructions.

Further, the service processor board 120 and the system board 110 are physically connected to each other.

As a result, the operating frequencies of the physical CPUs C0 and C1 n the system board 110 may be monitored from the service processor SP1 on the service processor board 120, or the service processor SP1 may be capable of communicating with software operating on the physical CPU.

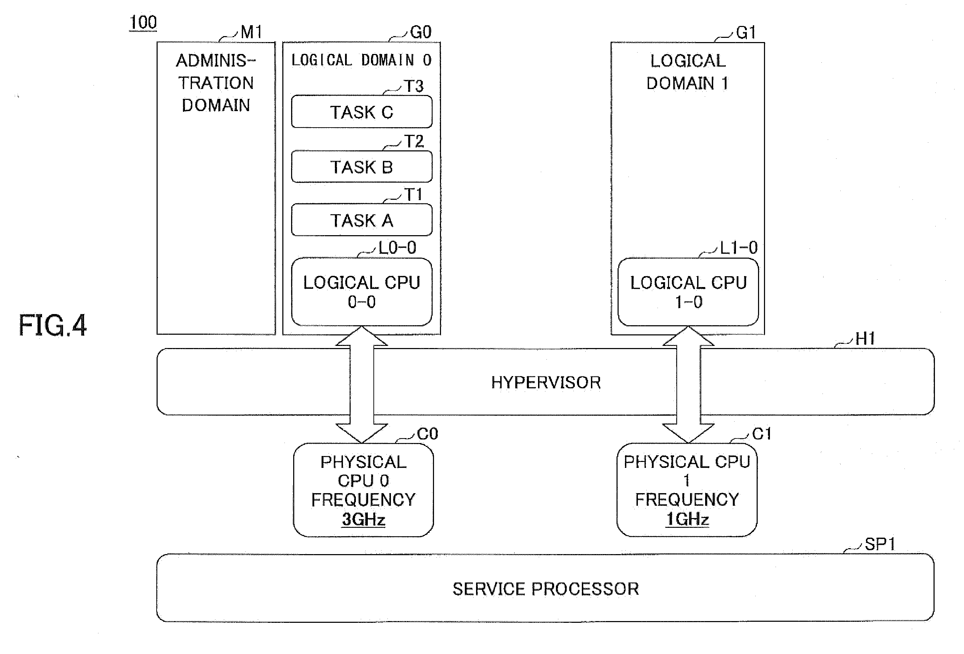

Next, details of processing executed by the server apparatus 100 according to the first embodiment are described by giving examples with reference to FIGS. 4 to 8. Note that in the examples, the load average of each of the logical CPUs is 100%.

FIG. 4 illustrates an initial state of the server apparatus 100. In the initial state, the logical CPUs L0-0 and L1-0 are allocated to the logical domains G0 and G1, respectively, as illustrated in Fig. 4. Further, the logical CPU L0-0 corresponds to the physical CPU C0 itself, and the logical CPU L1-0 corresponds to the physical CPU C1 itself. That is, the physical CPUs C0 and C1 are not time-shared, and generate the respective logical CPUs L0-0 and L1-0.

Further, in FIG. 4, the logical domain G0 has a high information processing load, and the physical CPU C0 providing the logical CPU L0-0 to the logical domain G0 is operating at the maximum operating frequency of 3 GHz. By contrast, in the state of FIG. 4, the logical domain G1 has low information processing load, and the physical CPU C1 providing the logical CPU L1-0 to the logical domain G1 is operating at the operating frequency of 1 GHz.

Further, the logical domain G0 is executing three information processing tasks T1, T2, and T3. Hence, the processing capability of the logical CPU L0-0 is time-shared, so that 1/3 of the processing capability of the logical CPU L0-0 is allocated to each of the three tasks T1, T2, and T3. That is, processing time provided by the logical CPU L0-0 is divided into three, so that 1/3 of the processing time provided by the logical CPU L0-0 is allocated to each of the tasks T1, T2, and T3. As a result, the processing capability of the physical CPU C0 of 3 GHz associated with the logical CPU L0-0 is equally divided into three, so that 1 GHz of the processing capability is allocated to each of the three tasks T1, T2, and T3.

The service processor SP1 monitors the respective operating frequencies of the physical CPUs C0 and C1, and determines whether the variability of the operating frequencies of the physical CPUs C0 and C1 is present. When the service processor SP1 determines that the variability of the operating frequencies of the physical CPUs C0 and C1 is present, the service processor SP1 transmits an instruction to the administration domain M1 to optimize the operating frequencies of the physical CPUs C0 and C1.

When the administration domain M1 receives the instruction, the administration domain M1 initially determines whether it is possible to obtain allocation of the logical CPUs capable of maintaining the current performance after having equalized the operating frequencies of the physical CPUs C0 and C1. The current performance indicates a state in which the logical CPUs L0-0 and L0-1 are allocated, as illustrated below. That is, the physical CPU C0 having the operating frequency of 3 GHz is allocated as the logical CPU L0-0 to the logical domain G0, and further, the logical CPU L0-0 is divided into three, each of which is allocated to the corresponding one of the tasks T1, T2, and T3. Further, the physical CPU C1 having the operating frequency of 1 GHz is allocated as the logical CPU L0-1 to the logical domain G1.

Note that an example differing from the example of FIG. 4 is considered here for convenience of illustration. In this example, it is assumed that one of the tasks requires high processing capability (e.g., processing capability of 3 GHz), and a logical CPU of 3 GHz associated with one physical CPU of 3 GHz is allocated to this task. In this case, when the operating frequencies of the physical CPUs are equalized such that each of the operating frequencies is changed to the mean operating frequency of 2 GHz, it may be impossible to allocate the processing capability of 3 GHz to the task that requires the high processing capability of 3Hz as described above. This is because the two logical CPUs belonging to the two different physical CPUs may be unable to execute one task in collaboration. Accordingly, in such a case, it may be impossible to allocate the logical CPU capable of maintaining the current performance after the equalization of the operating frequencies of the physical CPUs.

By contrast, the logical domain G0 illustrated in the example of FIG. 4 includes plural tasks, in which one logical CPU is time-shared to be allocated to the respective tasks. In this case, it may be possible to allocate the logical CPU capable of maintaining the current performance after the equalization of the operating frequencies of the physical CPUs This feature is described below with reference to FIGS. 4 to 6.

When the administration domain M1 receives an instruction from the service processor SP1 to optimize the operating frequencies of the physical CPUs as described above, the administration domain M1 determines whether it is possible to obtain allocation of the logical CPUs capable of maintaining the current performance after having equalized the operating frequencies of the physical CPUs. Specifically, the administration domain M1 utilizing information such as the number of tasks currently held by each of the logic domains, and the allocated configurations of the logical CPUs to the tasks. Then, the administration domain M1 determines based on the information whether it is possible to obtain the allocation of the logical CPUs capable of maintaining the current performance after having equalized the operating frequencies of the physical CPUs.

In the example of FIG. 4, the tasks processed by the logical domain G0 are three tasks T1, T2, and T3, and processing load of the logical domain G0 is shared between the three tasks such that 1/3 of the processing load of the logical domain G0 is equally imposed on each of the three tasks T1, T2, and T3. In this case, it is assumed that the administration domain M1 initially changes the current operating frequencies of 3 GHz and 1 GHZ corresponding to the physical CPUs C0 and C1 into the mean of 2 GHz. In this case, 2 GHz processing capability of the logical CPU L0-0, which is associated with the physical CPU C0 having the operating frequency changed into 2 GHz, is allocated to the logical domain G0 to which 3 GHz is currently allocated. Consequently, in the logical domain G0, the difference of 1 GHz between the original processing capability of 3 GHz and the changed processing capability of 2 GHz may result in the deficient processing capability.

By contrast, as a result of the operating frequency changes of the above physical CPUs, 2 GHz processing capability of the logical CPU L1-0, which is associated with the physical CPU C1 having the operating frequency changed into 2 GHz, is allocated to the logical domain G1 to which 1 GHz is currently allocated. Consequently, in the logical domain G1, the difference of 1 GHz between the original processing capability of 1 GHz and the changed processing capability of 2 GHz may result in the excess of the processing capability.

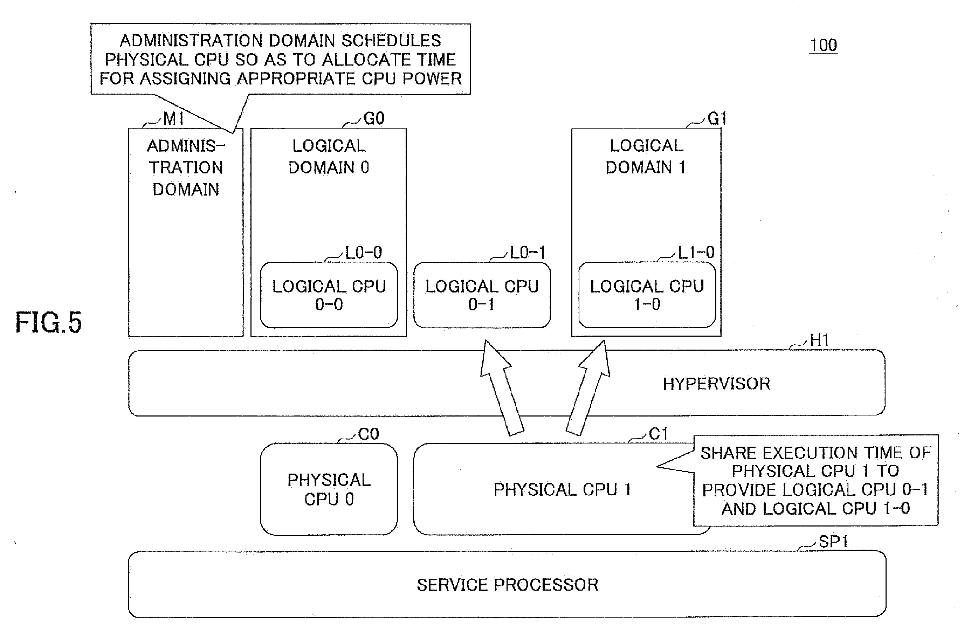

Thus, it is assumed that the administration domain M1 time-shares the physical CPU C1, which is associated with the logical domain G1 having the excessive processing capability, between two to generate two logical CPUs L0-1 and L1-0, such that the excessive processing capability of the CPU is applied to the deficient processing capability of the CPU, as illustrated in FIG. 5. As a result of time-sharing the physical CPU (the physical CPU C1), 1/2 (50%) of processing time provided by the physical CPU C1 is allocated to each of the two logical CPUs L0-1 and L1-0. That is, each of the two logical CPUs L0-1 and L1-0 includes 1/2 (50%) of the processing capability corresponding to 1 GHz obtained by dividing the changed operating frequency of 2 GHz of the physical CPU C1 into two.

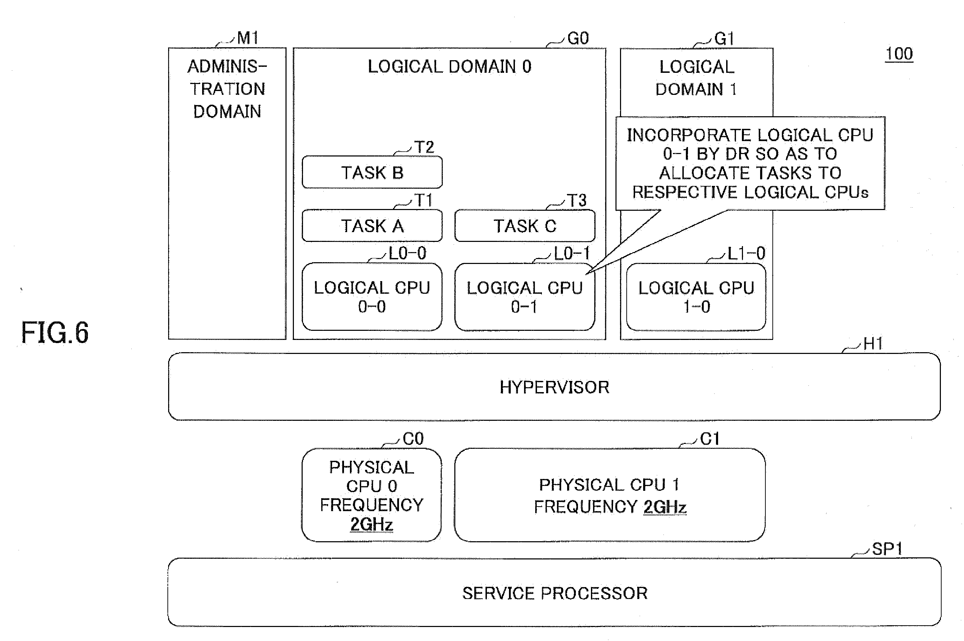

It is assumed that the administration domain M1 allocates the logical CPU L0-1, which is one of the logical CPUs L0-1 and L1-0, to the logical domain G0 having the deficient processing capability, and allocates the other logical CPU L1-0 to the original logical domain G1, as illustrated in FIG. 6. As a result, the logical CPU L0-0 (2 GHz) and the other logical CPU L0-1 are allocated to the logical domain G0; that is, a total amount of 3 GHz is allocated to the logical domain G0. Further, as described above, the logical domain G0 having high load includes three tasks T1, T2, and T3, each of which may require a processing capability of 1 GHz. Accordingly, 2 GHz of the processing capability of the logical CPU L0-0 may be allocated to the tasks T1 and T2, and 1 GHz of the processing capability of the CPU L0-1 may be allocated to the task T3. Thus, the logical domain G0 may maintain the initial performance illustrated in FIG. 4. By contrast, the logical CPU L1-0 having the processing capability of 1 GHz, which is generated from the physical CPU C1, is allocated to the logical domain G1. Thus, the logical domain G0 may be able to maintain the initial performance illustrated in FIG. 4. The allocation of the processing capabilities of the logical CPUs obtained after having equalized the operating frequencies of the physical CPUs illustrated in FIG. 6 may be expressed by the following formulas (1) and (2). Note that in the following formulas (1) and (2), the processing capability is indicated by the operating frequency (GHz) of the CPU.

```
LOGICAL DOMAIN G0:  2 GHz (L0-0(C0)) + (2 GHz (C1) ×
1/2) GHz (L0-1) = 3 GHz ...... (1)
```

```
LOGICAL DOMAIN G1:  (2 GHz (C1) × 1/2) GHz (L1-0) =
1 GHz ...... (2)
```

The administration domain M1 executes the following operation when the administration domain M1 determines that it is possible to allocate the logical CPUs G0 and G1 capable of maintaining the initial performance illustrated in FIG. 4 as the allocation of the logical CPUs obtained after having equalized the operating frequencies of the physical CPUs. That is, the administration domain M1 performs processing for implementing the allocation of the logical CPUs thus obtained after having equalized the operating frequencies of the physical CPUs. Note that the processing for implementing the allocation of the logical CPUs thus obtained after having equalized the operating frequencies of the physical CPUs indicate processing that changes the allocation of the logical CPUs to eliminate the excessiveness or deficiency of the processing capability caused by the equalization of the operating frequencies of the physical CPUs. The above processing may hereinafter be called an "operating frequency equalization and processing capability allocation processing".

In the operating frequency equalization and processing capability allocation processing, the administration domain M1 transmits an instruction to the hypervisor H1 to change the operating frequency of the physical CPU C1 from original 1 GHz to 2 GHz. The administration domain M1 then generates two logical CPUs L0-1 and L1-0 by time-sharing the processing capability of the physical CPU C1 obtained after having changed the operating frequency of the physical CPU C1. The administration domain M1 then allocates the logical CPU L0-1, which is one of the generated logical CPUs, to the logical domain G0, and allocates the other logical CPU L1-0 to the logical domain G1. The administration domain M1 transmits an instruction to the hypervisor H1 to change the operating frequency of the physical CPU C0 from original 3 GHz to 2 GHz. As a result, the allocation of the logical CPUs illustrated in FIG. 6 and expressed by the above formulas (1) and (2) may be implemented in the server apparatus 100.

Note that as illustrated above, it is preferable that the processing of raising the operating frequency of the physical CPU C1 be conducted prior to the processing of lowering the operating frequency of the physical CPU C0. This is because if the processing of lowering the operating frequency of the physical CPU C0 is conducted prior to the processing of raising the operating frequency of the physical CPU C1, the following situation may be induced. That is, the processing capability corresponding to information processing load necessary for the logical domains may become deficient by lowering the operating frequency of the physical CPU C0.

On the other hand, when it may be impossible to obtain the allocation of the logical CPUs G0 and G1 capable of maintaining the initial performance illustrated in FIG. 4 after equalization of the operating frequencies of the physical CPUs, the administration domain M1 does not conduct the operating frequency equalization and processing capability allocation processing. As illustrated in the above example, it is assumed that the one of the tasks held by the logical domain G0 has a high load, and the entire 3 GHz of one physical CPU is substantially allocated to that task. In such a case, it may be impossible to acquire the allocation of the logical CPUs capable of maintaining the initial performance illustrated in FIG. 4 after the equalization of the operating frequencies of the physical CPUs.That is, in this case, the operating frequency of the physical CPU C1, which is associated with the logical CPU L1-0 allocated to the logical domain G1, is raised to 2 GHz. Then, 2 GHz of the operating frequency of the physical CPU C1 is divided into two, so that 1 GHz of the logical CPU L0-1,which is obtained after having divided 2 GHZ of the operating frequency of the physical CPU C1, is allocated to the logical domain G0 having a high load. However, as described earlier, the two logical CPUs belonging to the two different physical CPUs may be unable to execute one task in collaboration. Accordingly, it may be impossible to acquire the allocation of the logical CPUs capable of maintaining the initial performance illustrated in FIG. 4 after the equalization of the operating frequencies of the physical CPUs.

FIG. 7 is a diagram illustrating a comparison of power consumption of the server apparatus 100 before and after the operating frequency equalization and processing capability allocation processing (illustrated as "reconfiguration" in figures) illustrated above with reference to FIGS. 4 to 6. First, the ratio of the processing capability of the logical CPU allocated to each of the logical domains G0 and G1 before and after the operating frequency equalization and processing capability allocation processing is 1 : 1, indicating mutually equal to each other. Note that in FIG. 7, DOMAIN 0 indicates the logical domain G0, and DOMAIN 1 indicates the logical domain G1. In the logical domain G0, the operating frequency is 3 [GHz] $\times$ 1 = 3 [GHz] before the operating frequency equalization processing of the physical CPUs, and the operating frequency is 2 [GHz] $\times$ 1+2 [GHz] $\times$ 1/2 = 3 [GHz] after the operating frequency equalization and processing capability allocation processing, which indicates the mutually equal ratio of 1 : 1. In the logical domain G1, the operating frequency is 1 [GHz] $\times$ 1 = 1 [GHz] before the operating frequency equalization and processing capability allocation processing, and the operating frequency is 2 [GHz] $\times$ 1/2 = 1 [GHz] after the operating frequency equalization and processing capability allocation processing, which indicates the mutually equal ratio of 1 : 1.

Next, the power consumption of all physical CPUs illustrated in FIG. 7 ("power consumption of all CPUs" in FIG. 7) is described. For convenience of illustration, as a value indicating the power consumption of each physical CPU, a value (f [GHz] $\times$ (v [V])$^2$) obtained by multiplying the square of the voltage of the power source (v) by an operating frequency (f) is used. In this case, when the operating frequency (f) is 1 GHz, the power supply voltage (v) is 1 [V]. Further, in each of the physical CPUs, the power supply voltage (v) is proportional to the operating frequency (f). More specifically, the power consumption is proportional to the cube of the operating frequency (f) (see paragraphs [0004] and [0005] in Patent Document 1).

A value indicating the power consumption of the physical CPU C0 before the operating frequency equalization and processing capability allocation processing is computed as 3 [GHz] $\times$ (3 [V])$^2$ = 27. Likewise, a value indicating the power consumption of the physical CPU C1 before the operating frequency equalization and processing capability allocation processing is computed as 1 [GHz] $\times$ (1 [V])$^2$ = 1. Thus, a value indicating the power consumption of all the physical CPUs before the operating frequency equalization and processing capability allocation processing is computed as 27 + 1 = 28.

By contrast, a value indicating the power consumption of the physical CPU C0 after the operating frequency equalization and processing capability allocation processing is computed as 2 [GHz] $\times$ (2 [V])$^2$ = 8. Likewise, a value indicating the power consumption of the physical CPU C1 after the operating frequency equalization and processing capability allocation processing is computed as 2 [GHz] $\times$ (2 [V])$^2$ = 8. Thus, a value indicating the power consumption of all the physical CPUs after the operating frequency equalization and processing capability allocation processing is computed as 8 + 8 = 16. Accordingly, a ratio of before and after the operating frequency equalization and processing capability allocation processing is 27 : 16. That is, as a result of the operating frequency equalization and processing capability allocation processing, the power consumption of all the physical CPUs is 0.57 times the power consumption of all the physical CPUs before the operating frequency equalization and processing capability allocation processing, which indicates that the power consumption of all the physical CPUs is reduced after the operating frequency equalization and processing capability allocation processing. That is, the processing capability of the logical CPUs allocated to the logical domains before and after the operating frequency equalization and processing capability allocation processing is unchanged; however, the total power consumption of all the physical CPUs is reduced by 43%.

Thus, according to the first embodiment, the processing capacity of the CPUs of the whole system is proportional to the sum of the operating frequencies to the first power, and the power consumption being proportional to the cube of the operating frequency is focused on. Accordingly, the power consumption may be effectively reduced by suppressing the variability of the operating frequency of the CPUs as much as possible.

The administration domain M1 computes the processing capability of the logical CPU to be allocated to the logical domain as the processing capability corresponding to the sum of consumption of all the logical CPUs allocated to the logical domain. Note that the consumption of the logical CPU is proportional to the number obtained by multiplying the load average of the logical CPU by an operating frequency of the logical CPU. Further, the operating frequency of each of the logical CPUs is the number obtained by multiplying the operating frequency of the physical CPU associated with the logical CPU by the allocation rate by time-sharing. The allocation rate by time-sharing indicates a ratio of the processing time allocated to the logical CPU to the processing time provided by the physical CPU when the logical CPU is generated from the physical CPU. For example, when the physical CPU is divided into three and three logical CPUs are generated from the physical CPU, the allocation rate by time-sharing in each of the logical CPU is 1/3.

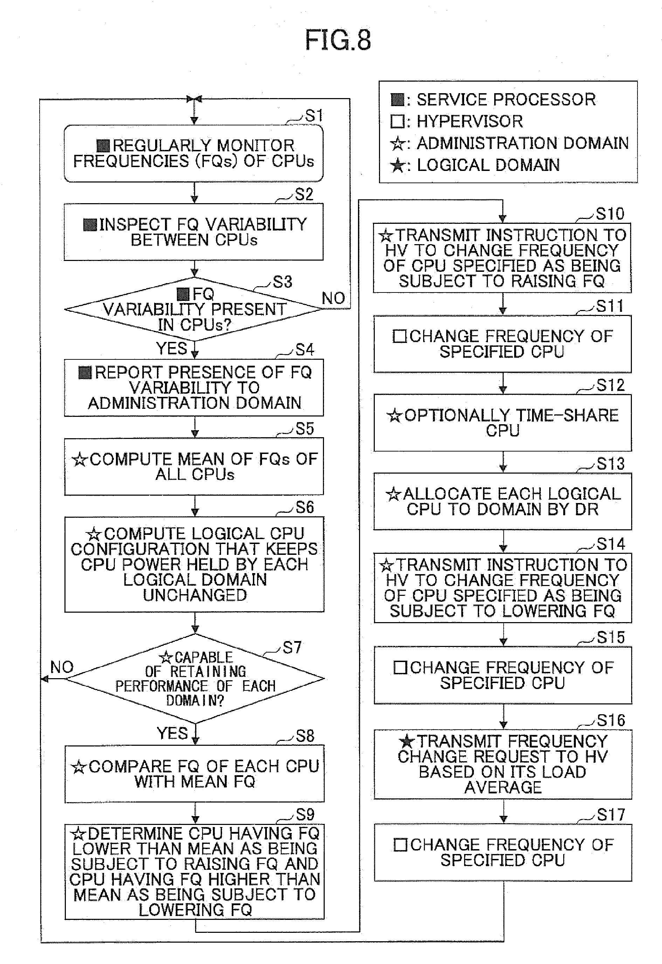

Next, illustration is given below, with reference to FIG. 8, of a flow of the processing according to the first embodiment described above with reference to FIGS. 4 to 7.

In step S1, the service processor SP1 regularly monitors the respective operating frequencies of the physical CPUs C0 and C1. In step S2, the service processor SP1 determines whether the variability of the operating frequency between the physical CPUs C0 and C1 is present. When the determination result indicates the presence of variability of the operating frequency ("YES" in step S3), the service processor SP1 goes to step S4, whereas when the determination result indicates the absence of variability of the operating frequency ("NO" in step S3), the service processor SP1 returns to step S1. In step S4, the service processor SP1 reports to the administration domain M1 the presence of the variability of the operating frequency between the physical CPUs.

Next, in step S5, the administration domain M1 receives the report from the service processor SP1 and computes the mean of the operating frequencies of all the physical CPUs. Next, in step S6, the administrator domain M1 computes the allocation of the logical CPUs (logical CPU's configuration) capable of maintaining the processing capability of the logical CPUs allocated to each of the logical domains when the operating frequency of each of the physical CPUs is changed to the mean (i.e., equalization) computed in step S5. Next, in step S7, the administration domain M1 determines whether the configuration of the logical CPUs computed in step S6 is capable of maintaining the logical CPUs allocated to each of the logical domains. As a result of step S7, when the computed configuration of the logical CPUs is not capable of maintaining the logical CPUs allocated to each of the logical domains ("NO" in step S7), the administration domain M1 executes step S1. On the other hand, when the configuration of the computed logical CPUs is capable of maintaining the logical CPUs allocated with each of the logical domains ("YES" in step S7), the administration domain M1 goes to step S8.

In step S8, the administration domain M1 compares the current operating frequency of each of the physical CPUs with the mean of the operating frequencies computed in step S5. Next, in step S9, the administration domain M1 detects the physical CPU having the operating frequency lower than the mean as the physical CPU subject to raising the operating frequency, and the administration domain M1 detects the physical CPU having the operating frequency higher than the mean as the physical CPU subject to lowering the operating frequency. Next, in step S10, the administration domain M1 transmits an instruction to the hypervisor H1 to raise the operating frequency of the physical CPU detected as the physical CPU subject to raising the operating frequency. When the hypervisor H1 receives the above instruction, the hypervisor H1 raises the operating frequency of the corresponding physical CPU in step S11.

Next, in step S12, the administration domain M1 optionally time-shares the physical CPU having the raised operating frequency to generate plural logical CPUs from one physical CPU. For example, when the processing capability of the physical CPU is increased as a result of raising the operating frequency of the physical CPU, and the processing capability becomes excessive corresponding to the information processing load of the logical domain having the logical CPU associated with the physical CPU, the physical CPU may be time-shared. Then, in step S13, the administration domain M1 allocates a part of the plural logical CPUs obtained by the time-shearing to another logical domain having the current logical CPU the processing capability of which is deficient corresponding to the information processing load. The allocation of the logical CPU to the logical domain may be performed by a dynamic reconfiguration (DR) function.

Next, in step S14, the administration domain M1 transmits an instruction to the hypervisor H1 to lower the operating frequency of the physical CPU detected as the physical CPU subject to lowering the operating frequency. Next, the hypervisor H1 lowers the operating frequency of the corresponding physical CPU in step S15.

Next, in step S16, an OS of each of the logical domains requests the hypervisor H1 to change the operating frequency of the corresponding logical CPU based on the load average of the logical CPU associated with the corresponding logical domain. For example, the OS of the logical domain transmits an instruction to the hypervisor H1 to lower the operating frequency of the corresponding CPU when the load average of the logical CPU is low. Likewise, the OS of the logical domain transmits an instruction to the hypervisor H1 to raise the operating frequency of the corresponding CPU when the load average of the logical CPU is high.

Next, in step S17, the hypervisor H1 changes the operating frequency of the corresponding physical CPU based on the instruction of step S16 received from the OS of the logical domain. next, step S1 is executed again. Note that when the variability is observed in the operating frequency of the physical CPU as a result of changing the operating frequency of the physical CPU in step S17 ("YES" in steps S2 and S3), processing subsequent to step S4 is executed again.

Note that in step S6, the administration domain M1 acquires the load average of the logical CPUs associated with each of the logical domains, and computes the processing capability of the logical CPUs allocated to the corresponding logical domain based on the acquired load average. As a result, the administration domain M1 may lower the processing capability of the logical CPUs allocated to the logical domain based on the load average when the load average is low.

Further, in step S6, the administration domain M1 inspects a status of a task processed by the logical domain having high load, and determines whether it is possible to execute the above task upon the equalization of the operating frequencies of the physical CPUs. For example, when information processing load corresponding to a specific task is high, and the operating frequencies of the physical CPUs are equalized, it may be impossible for one operating frequency associated with the physical CPU after the equalization of the operating frequencies to execute the corresponding task. In this case, the administration domain M1 determines that the equalization will not be performed on the operating frequencies of the physical CPUs.

Further, in step S9, the administration domain M1 extracts the logical domain associated with the physical CPU subject to raising operating frequency and the logical domain associated with the physical CPU subject to lowering operating frequency. Then, in step S12, the administration domain M1 time-shares the corresponding physical CPU based on the load average of the logical CPU belonging to the logical domain associated with the physical CPU having the operating frequency raised in steps S11 and S12. For example, when the load average of the logical CPU is 1/2, the physical CPU associated with the corresponding logical CPU is time-shared between two. Likewise, when the load average of the logical CPU is 1/3, the physical CPU associated with the corresponding logical CPU is time-shared between three. Then, in step S13, the administration domain M1 allocates the logical CPU generated by time-sharing to the logical domain to which the physical CPU having the operating frequency lowered in steps S14 and S15 is allocated.

Thus, the administration domain M1 time-shares the physical CPU having the operating frequency raised by the equalization of the operating frequencies of the physical CPUs, and allocates the logical CPU generated by time-sharing to the logical domain associated with the physical CPU having the lowered operating frequency. The administration domain M1 determines the allocation of the logical CPU such that the processing capability equivalent to the processing capability before the equalization of the operating frequencies of the physical CPUs is allocated to each of the logical domains.

Note that steps S10 and S11 of raising the operating frequency of the physical CPU are executed before steps S12 and S13 of time-sharing the physical CPU to allocate the logical CPU, and steps S14 and S15 of lowering the operating frequency of the physical CPU are executed after steps S12 and S13. In this manner, it may be possible to prevent a temporal deficiency of the processing capability necessary for each of the logical domains.

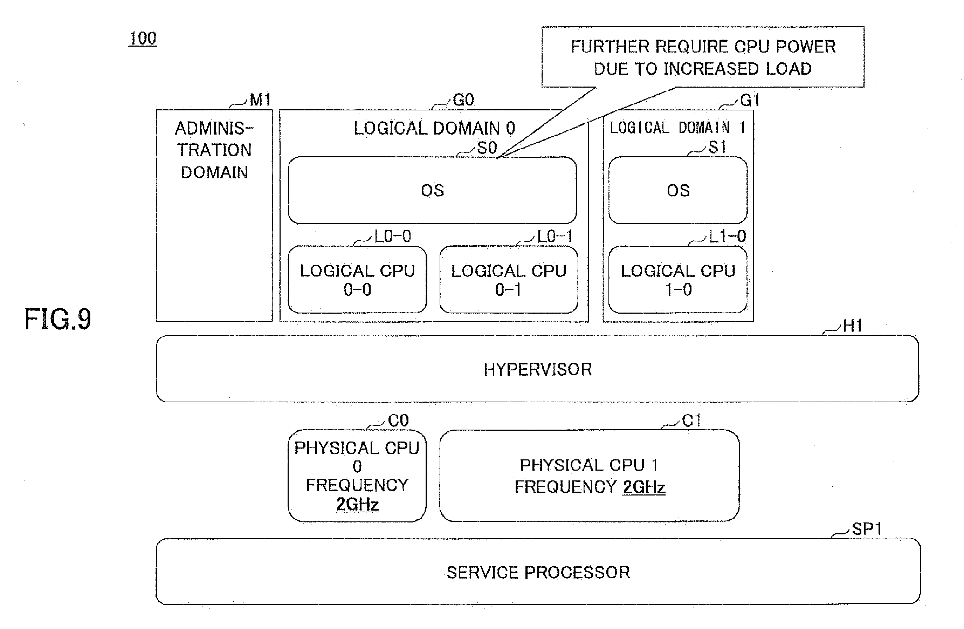

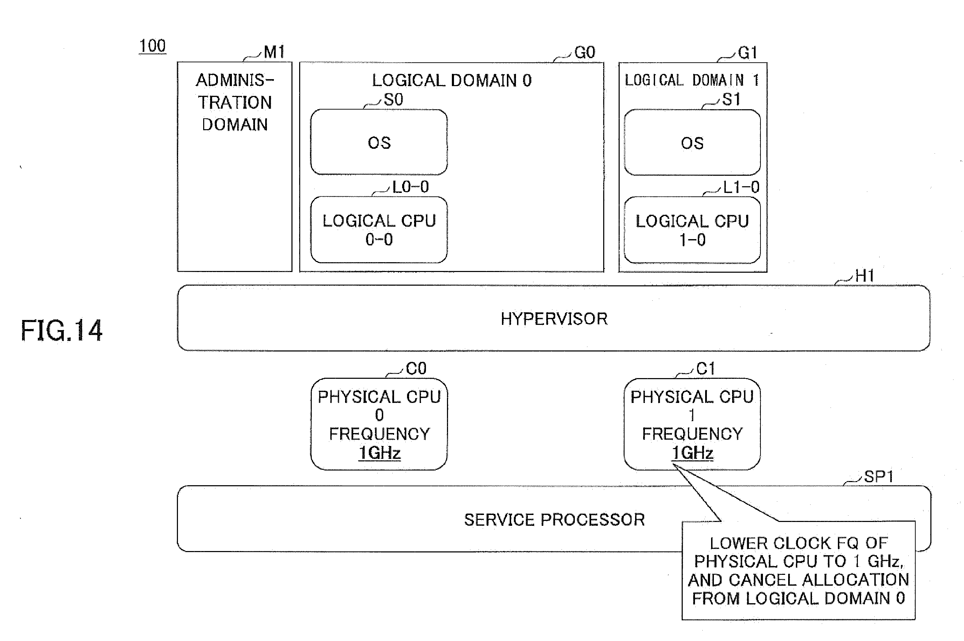

Next, details of step S16 illustrated in FIG. 8 are described together with reference to FIGS. 9 to 14. In the operations of steps S10 to S15, when the equalization of the operating frequencies of the physical CPUs is executed, all the physical CPUs held by the server apparatus 100 have equal operating frequencies. Thereafter, the OS of each of the logical domains changes the operating frequency of the logical CPU via the hypervisor H1 based on the load average of the logical CPU belonging to the logical domain. As a result, the variability is present in the operating frequencies of the physical CPUs ("YES" in step S3 of FIG. 8).

For example, it is assumed a case where a job is hardly operated on the OS in a certain logical domain. That is, information processing load is extremely low (i.e., the load average is extremely low) so that the logical domain is in an idle state. In this case, the OS lowers the operating frequency of the logical CPU belonging to the corresponding logical domain via the hypervisor H1 in order to reduce the consumption of power. By contrast, when the OS determines that the processing capability of the logical CPU is further required, the OS raises the operating frequency of the logical CPU belonging to the corresponding logical domain via the hypervisor H1.

Next, a specific example of a situation where the variability is observed in the operating frequencies of the physical CPUs as a result of changing of the operating frequencies of the physical CPUs is illustrated with reference to FIGS. 9 to 11.

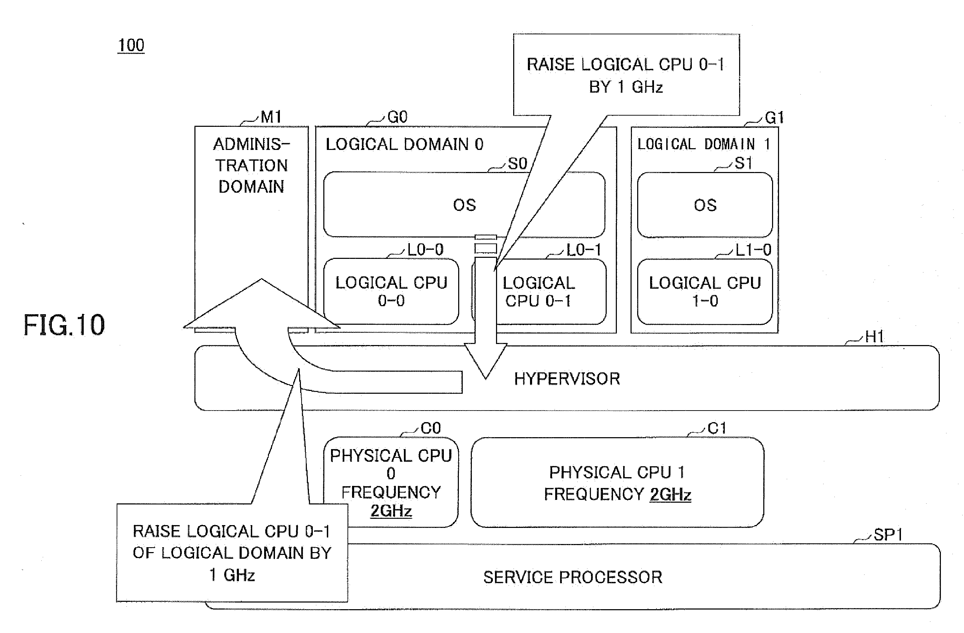

FIG. 9 illustrates an initial state of the server apparatus 100. As illustrated in FIG. 9, in the initial state, the operating frequencies of the physical CPUs C0 and C1 are both 2 GHZ. It is assumed a case where information processing load of the logical domain G0 is raised. In this case, OS S0 determines that the processing capability of the logical CPU is further required, and transmits an instruction to the hypervisor H1 to raise the operating frequency of the logical CPU L0-1. More specifically, as illustrated in FIG. 10, OS S0 transmits an instruction to the hypervisor H1 to raise the operating frequency of the logical CPU L0-1 by 1 GHz.

Note that in the initial state of FIG. 9, the logical CPU L0-1 is one of the two logical CPUs L0-1 and L1-0 generated by time-sharing the physical CPU C1 between two (i.e., a ratio of 1 : 1). That is, 1/2 of the processing capability corresponding to the operating frequency of 2 GHz of the physical CPU C1, which is 1 GHz of the processing capability is allocated to each of the two logical CPUs L0-1 and L1-0.

When the hypervisor H1 receives the instruction from the OS S0, the hypervisor H1 detects the logical CPU L0-1 associated with the instruction as the logical CPU generated by time-sharing the physical CPU C1, and reports the instruction from the OS S0 to the administration domain M1. The administration domain M1 receives the report from the hypervisor H1, and computes the allocation of the logical CPU that satisfies the request associated with the reported instruction. Note that when the logical CPU associated with the instruction from the IS is the physical CPU itself, that is, when the logical CPU is provided as it is without time-sharing the physical CPU, the hypervisor H1 may be able to raise the operating frequency of the physical CPU without reporting the instruction to the administration domain M1.

The administration domain M1 raises the operating frequency of the physical CPU C1 when it is possible to raise the operating frequency of the physical CPU C1 by 1 GHz based on the corresponding request, the operating frequency of the physical CPU C1 being related to the logical CPU L0 - 1 associated with the instruction received from the OS S0 via the hypervisor H1. For example, when the current operating frequency of the physical CPU C1 has already reached the maximum operating frequency of 3 GHz, it is not possible to raise the operating frequency of the physical CPU C1 by 1 GHz . When it is not possible to raise the operating frequency of the physical CPU C1, the administration domain M1 determines whether it is possible to raise the operating frequency of other logical CPUs belonging to the logical domain G0.

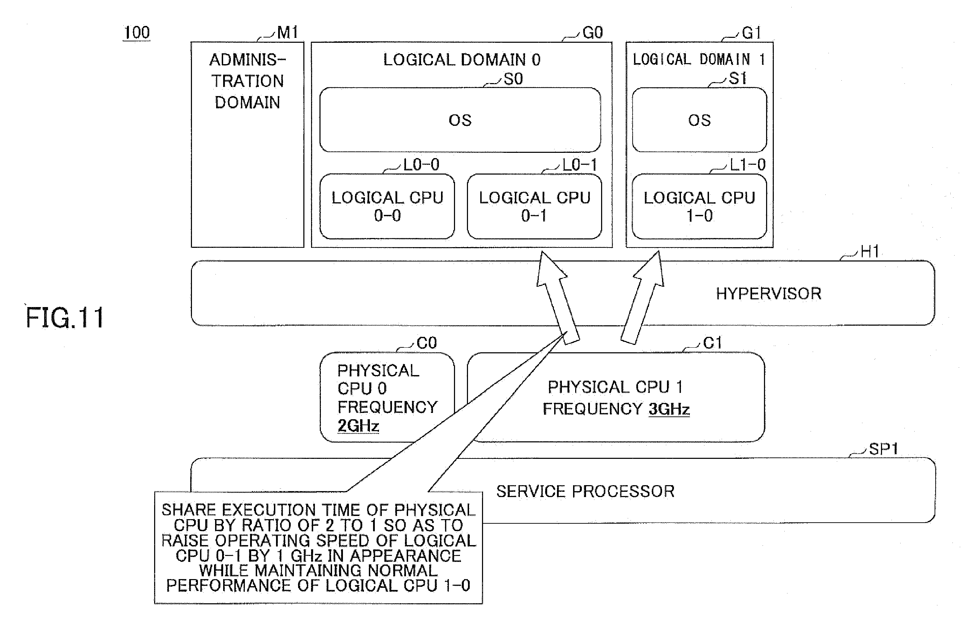

In an example of FIG. 10, the current operating frequency of the physical CPU C1 is 2 GHz, which may be raised by 1 GHz according to a request. Accordingly. the administration domain M1 transmits an instruction to the hypervisor H1 to raise the operating frequency of the physical CPU C1 by 1 GHz . The hypervisor H1 changes the operating frequency of the physical CPU C1 to 3 GHz by raising the operating frequency of the physical CPU C1 by 1 GHz based on the instruction from the administration domain M1, as illustrated in FIG. 11. Further, the administration domain M1 generates the logical CPUs L0-1 and L1-0 by time-sharing the processing capability of the physical CPU C1 at a ratio of 2 : 1. As a result, 2/3 of the processing capability corresponding to the operating frequency of 3 GHz of the physical CPU C1 after having changed its operating frequency, which is 2 GHz of the processing capability is allocated to the logical CPU L0-1. Further, 1/3 of the processing capability corresponding to the operating frequency of 3 GHz of the physical CPU C1 after having changed its operating frequency, which is 1 GHz of the processing capability is allocated to the logical CPU L1-0.

As a result, in the logical domain G0, the operating frequency of the logical CPU L0-1 is raised by 1 GHz as the instructed by the OS S0. Meanwhile, similar to the initial state of FIG. 9, the logical CPU L1-0having the operating frequency of 1 GHz is allocated to the logical domain G1, so that the processing capability of the initial state is maintained.

According to the operations illustrated with reference to FIGS. 9 to 11, the initial state illustrated in FIG. 9 may be maintained. That is, the operating frequencies of the physical CPUs C0 and C1 that are both 2 GHz in the initial state of FIG. 9 have been changed to 2 GHz and 3 GHz, respectively, as the operating frequencies of the physical CPUs C0 and C1 illustrated in FIG. 11. That is, the variability is present in the operating frequencies of the physical CPUs.

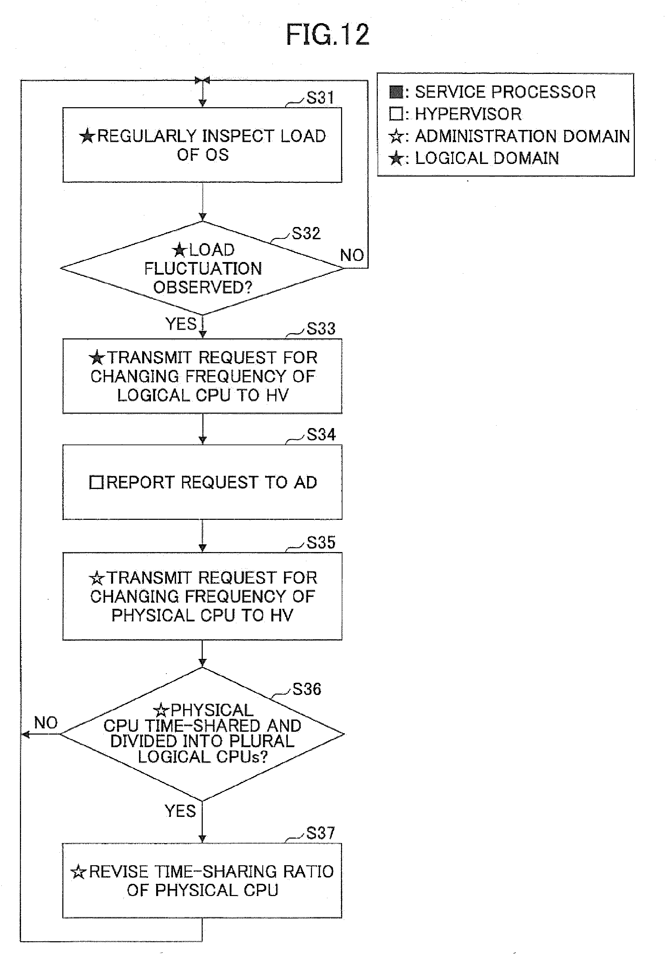

Next, an operating flow when the variability of the operating frequency of the physical CPU is present is illustrated with reference to FIG. 12 in the server apparatus 100 described above with reference to FIGS. 9 to 11.

In step S31 of FIG. 12, an OS of each of the logical domains regularly monitors a load average of a physical domain associated with the logical domain. That is, the OS of the corresponding logical domain monitors an information processing load status within the logical domain. Then, when the OS of any of the logical domains detects a change of the load status ("YES" in step S32), the OS of logical domain goes to step S33. On the other hand, when the OS of the logical domain does not detect a change of the load status ("NO" in step S32), the OS of logical domain returns to step S31.

In step S33, each of the OS of the logical domains requests the hypervisor H1 to change the operating frequency of the logical CPU belonging to the logical domain such that the operating frequency of the logical CPU is adjusted to the change of the load status. That is, the OS of the logical domain transmits a request to raise the operating frequency of the logical CPU when the load of the logical domain is increased, whereas the OS of the logical domain transmits a request to lower the operating frequency of the logical CPU when the load of the logical domain is decreased.

In step S34, the hypervisor H1 reports the corresponding request to the administration domain M1 based on the request from the OS of the logical domain. In step S35, the administration domain M1 receives the report on the request, and transmits to the hypervisor H1 the request to change the operating frequency of the physical CPU associated with the logical CPU that has transmitted the corresponding request. Further, in step S36, the administration domain M1 determines whether the logical CPU that has transmitted the request is generated by time-sharing the physical CPU. When the logical CPU is not generated by time-sharing the physical CPU ("NO" in step S36), step S31 is executed. When the logical CPU is generated by time-sharing the physical CPU ("YES" in step S36), the administration domain M1 goes to step S37.

In step S37, the administration domain M1 optionally changes a time-sharing ratio of the physical CPU. That is, in step S36, the administration domain M1 optionally changes a time-sharing ratio of the physical CPU such that the operating frequency of the logical CPU belonging to the physical CPU the operating frequency of which has been changed in step S36 provides a processing capability based on a load status of the logical domain in which the logical CPU resides. In the example of FIG. 11, a time-shearing ratio of the logical CPUs L0-1 and L1-0 is 1 : 1 in the initial state of FIG. 9. Thereafter, after the operating frequency of the physical CPU C1 is changed to 3 GHz to be adjusted to the change of the information processing load of each of the logical domains G0 and G1 as described above with reference to FIG. 11, the time-sharing ratio of the logical CPUs L0-1 and L1-0 is changed to 2 : 1.

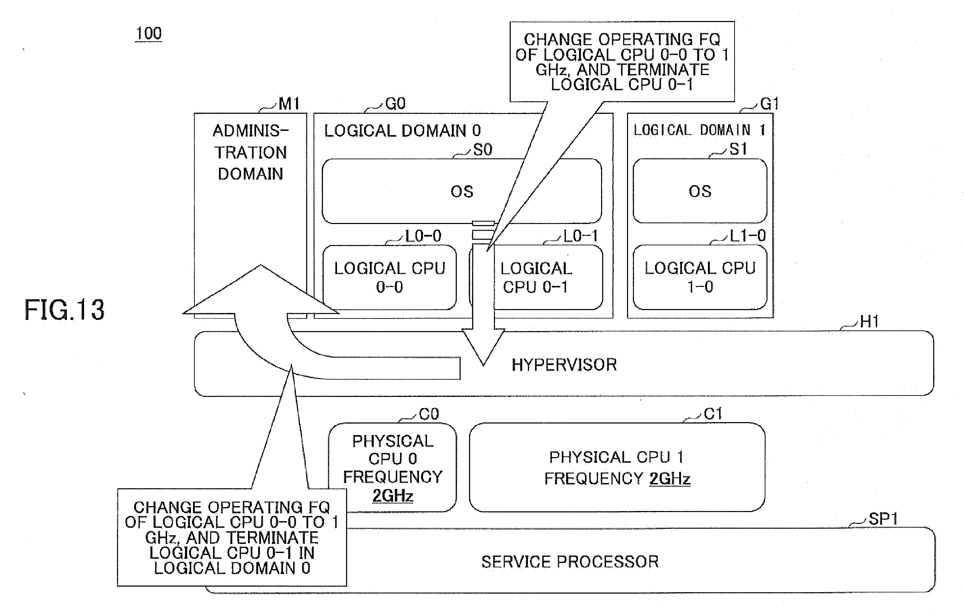

Next, another specific example of a situation where the variability of the operating frequency of the physical CPU is present as illustrated above with reference to FIGS. 9 to 11 in the server apparatus 100 is described with reference to FIGS. 13 to 14.

The initial state in this case is similar to that illustrated in FIG. 9. It is assumed that an information processing load of the logical domain G0 is decreased thereafter. In response to this, it is assumed that the OS of the logical domain G0 transmits the following instruction to the hypervisor H1. That is, it is assumed that the OS of the logical domain G0 transmits the following instruction to change the operating frequency of 2 GHz of the logical CPU L0-0 to 1 GHz by lowering the operating frequency of 2 GHz of the logical CPU L0-0 by 1 GHz, and stop the logical CPU L0-1 having the operating frequency of 1 GHz. The hypervisor H1 that has received the instruction from the OS S0 of the logical domain G0 reports the corresponding instruction to the administration domain M1.

The administration domain M1 cancels the allocation of the logical CPU L0-1 to the logical domain G0 in response to the corresponding instruction. The administration domain M1 further transmits an instruction to the hypervisor H1 to change the operating frequency of the physical CPU C0 in which the logical CPU L0-0 resides to 1 GHz by reducing the operating frequency of the physical CPU C0 by 1 GHz from the original operating frequency of 3 GHz. As a result, the hypervisor H1 changes the operating frequency of the physical CPU C0 to 1 GHz.

Further, since the allocation of the logical CPU L0-1 having the operating frequency of 1 GHz to logical domain G0 is canceled so that the logical CPU L0-1 becomes unnecessary, the administration domain M1 will not perform the time-sharing of the physical CPU C1 in which the logical CPU L0-1 resides. That is, the administration domain M1 generates one logical CPU L1-0 from the physical CPU C1 without time-sharing the physical CPU C1. Further, the administration domain M1 transmits an instruction to the hypervisor H1 to change the operating frequency of the physical CPU C1 to 1 GHz by decreasing the operating frequency of the physical CPU C1 by 1 GHz from the original operating frequency of 3 GHz. As a result, the hypervisor H1 changes the operating frequency of the physical CPU C1 to GHz . Consequently, the logical CPU having the operating frequency of 1 GHz, which resides alone in the logical CPU C1, has a processing capability corresponding to the operating frequency of 1 GHz.

Thus, in the logical domain G0, the operating frequency of the logical CPU L0-0 is changed to 1 GHz by lowering the operating frequency of the logical CPU L0-0 by 1 GHz from 2 GHz as instructed by the OS S0, and the logical CPU L0-1 disappears. Further, similar to the initial state of FIG. 9, a processing capability of corresponding to the operating frequency of 1 GHz is allocated by the logical CPU L0-0 in the logical domain G1, such that the processing capability of the logical domain G1 is maintained.

Note that as described above, the administration domain M1 may be implemented by a program stored in the main storages 111 and 112 illustrated in FIG. 3. As a result, the processing of the administration domain M1 in the server apparatus according to the first embodiment illustrated above with reference to FIGS. 1 to 14 may be executed by the CPU C0 or C1. Note that the above program may be externally supplied from a compact disk-read only memory (CD-ROM) or the like serving as a removable computer-readable information recording medium, and be loaded from the CD-ROM or the like in the main storages 111 and 112 of the server apparatus 100. Alternatively, the above program may be downloaded from an external server to the main storages 111 and 112 of the server apparatus 100 via a communication network such as the Internet, a local area network, or the like.

EXPLANATION OF REFERENCE NUMERALS

100 server apparatus
110 system board
120 service processor board
M1 administration domain (logical CPU generating part, operating frequency averaging part, logical CPU allocation part, operating frequency adjustment part)
G0, F1 logical domain
L0-0, L0-1, L1-0 logical CPU

C0, C1 physical CPU
H1 hypervisor
SP1 service processor

**Claims**

1. An information processing apparatus comprising:

    a plurality of CPUs configured to operate in parallel;
    a logical CPU generating part configured to generate one or more logical CPUs from one of the plurality of the CPUs;
    an operating frequency averaging part configured to change each of operating frequencies of the CPUs to match a mean of the operating frequencies; and
    a logical CPU allocation part configured to cause the logical CPU generating part to generate the logical CPU so as to eliminate an excess or a deficiency of a processing capability with respect to an information processing load associated with a partition to which the logical CPU belonging to the CPU is allocated, the excess or the deficiency being generated due to a change in the operating frequencies of the CPUs made by the operating frequency averaging part, and to allocate the generated logical CPU to the partition associated with the excess or the deficiency of the processing capability of the logical CPU.

2. The information processing apparatus as claimed in claim 1, wherein
    in a manner as to apply an excess of a processing capability, the excess being generated with respect to a load of information processing associated with a partition to which a logical CPU belonging to a CPU the processing capability of which is increased due to raising of the operating frequency by the operating frequency averaging part, to a deficiency of a processing ability, the deficiency being with respect to a load of information processing associated with a partition to which a logical CPU belonging to a CPU the processing capability of which is decreased due to lowering of the operating frequency by the operating frequency averaging part,
    the logical CPU allocation part causes the logical CPU generating part to generate the logical CPU by dividing the CPU associated with the excess of the processing capability, and allocates the logical CPU associated with the dividing to the partition associated with the deficiency of the processing capability.

3. The information processing apparatus as claimed in claim 1 or 2, further comprising:

    an operating frequency adjustment part configured to adjust changes of information processing loads in a plurality of the partitions by changing operating frequencies of logical CPUs belonging to the partitions having the changes of information processing loads.

4. The information processing apparatus as claimed in any one of claims 1 to 3 ; wherein
    the logical CPU generating part is configured to generate a plurality of the logical CPUs by time-sharing one of the plurality of the CPUs.

5. A method of controlling an information processing apparatus, the method comprising:

    generating one or more logical CPUs from one of a plurality of CPUs ;
    changing each of operating frequencies of the CPUs to match a mean of the operating frequencies; and
    causing a logical CPU generating part to generate the logical CPU so as to eliminate an excess or a deficiency of a processing capability with respect to an information processing load associated with a partition to which the logical CPU belonging to the CPU is allocated, the excess or the deficiency being generated due to a change in the operating frequencies of the CPUs made by the operating frequency averaging part, and to allocate the generated logical CPU to the partition associated with the excess or the deficiency of the processing capability of the logical CPU.

6. The method as claimed in claim 5, wherein in a manner as to apply an excess of a processing capability, the excess being generated with respect to a load of information processing associated with a partition to which a logical CPU belonging to a CPU the processing capability of which is increased due to raising of the operating frequency by the operating frequency averaging part, to a deficiency of a processing ability, the deficiency being with respect to a load of information processing associated with a partition to which a logical CPU belonging to a CPU the processing capability of which is decreased due to lowering of the operating frequency by the operating frequency averaging part, the logical CPU allocation part causes the logical CPU generating part to generate the logical CPU by dividing the CPU associated with the excess of the processing capability, and allocates the logical CPU associated with the dividing to the partition associated with the deficiency of the processing capability.

7.  The method as claimed in claim 5 or 6, further comprising:

adjusting changes of information processing loads in a plurality of the partitions by changing operating frequencies of logical CPUs belonging to the partitions having the changes of information processing loads.

8.  The method as claimed in any one of claims 5 to 7, wherein
the plurality of the logical CPUs are generated by time-sharing one of the plurality of the CPUs.

9.  A program executed by a computer, the program comprising:

generating one or more logical CPUs from one of a plurality of CPUs;
changing each of operating frequencies of the CPUs to match a mean of the operating frequencies; and
causing a logical CPU generating part to generate the logical CPU so as to eliminate an excess or a deficiency of a processing capability with respect to an information processing load associated with a partition to which the logical CPU belonging to the CPU is allocated, the excess or the deficiency being generated due to a change in the operating frequencies of the CPUs made by the operating frequency averaging part, and to allocate the generated logical CPU to the partition associated with the excess or the deficiency of the processing capability of the logical CPU.

10. The program as claimed in claim 9, wherein in a manner as to apply an excess of a processing capability, the excess being generated with respect to a load of information processing associated with a partition to which a logical CPU belonging to a CPU the processing capability of which is increased due to raising of the operating frequency by the operating frequency averaging part, to a deficiency of a processing ability, the deficiency being with respect to a load of information processing associated with a partition to which a logical CPU belonging to a CPU the processing capability of which is decreased due to lowering of the operating frequency by the operating frequency averaging part, the logical CPU allocation part causes the logical CPU generating part to generate the logical CPU by dividing the CPU associated with the excess of the processing capability, and allocates the logical CPU associated with the dividing to the partition associated with the deficiency of the processing capability.

11. The program as claimed in claim 9 or 10, further comprising:

adjusting changes of information processing loads in a plurality of the partitions by changing operating frequencies of logical CPUs belonging to the partitions having the changes of information processing loads.

12. The program as claimed in any one of claims 9 to 11, wherein
the plurality of the logical CPUs are generated by time-sharing one of the plurality of the CPUs.

# FIG.1

100

| M1 | G0 | G1 |
|---|---|---|
| ADMINIS-TRATION DOMAIN | LOGICAL DOMAIN 0 | LOGICAL DOMAIN 1 |

L0-0 LOGICAL CPU 0-0

L0-1 LOGICAL CPU 0-1

L1-0 LOGICAL CPU 1-0

H1 HYPERVISOR

C0 PHYSICAL CPU 0 FREQUENCY **2GHz**

C1 PHYSICAL CPU 1 FREQUENCY **2GHz**

SP1 SERVICE PROCESSOR

FIG.2

SERVER APPARATUS 100

ADMINISTRATION DOMAIN M1

LOGICAL DOMAIN 0 G0
  OS S0
  LOGICAL CPU 0-0 L0-0

LOGICAL DOMAIN 1 G1
  OS S1
  LOGICAL CPU 1-0 L1-0

HYPERVISOR H1

PHYSICAL CPU 0 FREQUENCY 3GHz C0

PHYSICAL CPU 1 FREQUENCY 3GHz C1

SERVICE PROCESSOR SP1

# FIG.3

SERVER APPARATUS ~100

SYSTEM BOARD ~110

MAIN STORAGE ~111

MAIN STORAGE ~112

PHYSICAL CPU 0 FREQUENCY 3GHz ~C0

PHYSICAL CPU 1 FREQUENCY 3GHz ~C1

SERVICE PROCESSOR ~SP1

SERVICE PROCESSOR BOARD ~120

FIG.4

# FIG.5

100

ADMINISTRATION DOMAIN SCHEDULES PHYSICAL CPU SO AS TO ALLOCATE TIME FOR ASSIGNING APPROPRIATE CPU POWER

M1 — ADMINIS-TRATION DOMAIN

G0 — LOGICAL DOMAIN 0

L0-0 — LOGICAL CPU 0-0

L0-1 — LOGICAL CPU 0-1

G1 — LOGICAL DOMAIN 1

L1-0 — LOGICAL CPU 1-0

H1 — HYPERVISOR

C0 — PHYSICAL CPU 0

C1 — PHYSICAL CPU 1

SHARE EXECUTION TIME OF PHYSICAL CPU 1 TO PROVIDE LOGICAL CPU 0-1 AND LOGICAL CPU 1-0

SP1 — SERVICE PROCESSOR

EP 2 595 056 A1

## FIG.6

FIG.7

| | | BEFORE RECONFIGURATION | AFTER RECONFIGURATION |
|---|---|---|---|
| PERFORMANCE PER DOMAIN | DOMAIN 0 | 1<br>DETAILS: 3GHz × 1 | 1<br>DETAILS: 2GHz × 1+2GHz × 1/2 |
| | DOMAIN 1 | 1<br>DETAILS: 1GHz × 1 | 1<br>DETAILS: 2GHz × 1/2 |
| POWER CONSUMPTION OF ALL CPUs | | 28<br>DETAILS<br>PHYSICAL CPU 0: 3GHz × 3V²=27<br>PHYSICAL CPU 1: 1GHz × 1V²=1<br>TOTAL POWER CONSUMPTION=27+1 | 16 (16/28≒0.57)<br>DETAILS<br>PHYSICAL CPU 0: 2GHz × 2V²=8<br>PHYSICAL CPU 1: 2GHz × 2V²=8<br>TOTAL POWER CONSUMPTION=8+8 |

# FIG.8

■ : SERVICE PROCESSOR
□ : HYPERVISOR
☆ : ADMINISTRATION DOMAIN
★ : LOGICAL DOMAIN

S1
■REGULARLY MONITOR FREQUENCIES (FQs) OF CPUs

S2
■INSPECT FQ VARIABILITY BETWEEN CPUs

S3
■FQ VARIABILITY PRESENT IN CPUs? — NO

YES
S4
■REPORT PRESENCE OF FQ VARIABILITY TO ADMINISTRATION DOMAIN

S5
☆COMPUTE MEAN OF FQs OF ALL CPUs

S6
☆COMPUTE LOGICAL CPU CONFIGURATION THAT KEEPS CPU POWER HELD BY EACH LOGICAL DOMAIN UNCHANGED

S7
☆CAPABLE OF RETAINING PERFORMANCE OF EACH DOMAIN? — NO

YES
S8
☆COMPARE FQ OF EACH CPU WITH MEAN FQ

S9
☆DETERMINE CPU HAVING FQ LOWER THAN MEAN AS BEING SUBJECT TO RAISING FQ AND CPU HAVING FQ HIGHER THAN MEAN AS BEING SUBJECT TO LOWERING FQ

S10
☆TRANSMIT INSTRUCTION TO HV TO CHANGE FREQUENCY OF CPU SPECIFIED AS BEING SUBJECT TO RAISING FQ

S11
□CHANGE FREQUENCY OF SPECIFIED CPU

S12
☆OPTIONALLY TIME-SHARE CPU

S13
☆ALLOCATE EACH LOGICAL CPU TO DOMAIN BY DR

S14
☆TRANSMIT INSTRUCTION TO HV TO CHANGE FREQUENCY OF CPU SPECIFIED AS BEING SUBJECT TO LOWERING FQ

S15
□CHANGE FREQUENCY OF SPECIFIED CPU

S16
★TRANSMIT FREQUENCY CHANGE REQUEST TO HV BASED ON ITS LOAD AVERAGE

S17
□CHANGE FREQUENCY OF SPECIFIED CPU

## FIG.9

**100**

FURTHER REQUIRE CPU POWER
DUE TO INCREASED LOAD

M1

ADMINIS-
TRATION
DOMAIN

G0
LOGICAL DOMAIN 0

S0
OS

L0-0
LOGICAL CPU
0-0

L0-1
LOGICAL CPU
0-1

G1
LOGICAL DOMAIN 1

S1
OS

L1-0
LOGICAL CPU
1-0

H1
HYPERVISOR

C0
PHYSICAL CPU
0
FREQUENCY
2GHz

C1
PHYSICAL CPU 1
FREQUENCY 2GHz

SP1
SERVICE PROCESSOR

EP 2 595 056 A1

EP 2 595 056 A1

**FIG.10**

100

RAISE LOGICAL CPU 0-1
BY 1 GHz

M1 — ADMINIS-TRATION DOMAIN

G0 — LOGICAL DOMAIN 0

S0 — OS

L0-0 — LOGICAL CPU 0-0

L0-1 — LOGICAL CPU 0-1

G1 — LOGICAL DOMAIN 1

S1 — OS

L1-0 — LOGICAL CPU 1-0

H1 — HYPERVISOR

C0 — PHYSICAL CPU 0 FREQUENCY 2GHz

C1 — PHYSICAL CPU 1 FREQUENCY 2GHz

RAISE LOGICAL CPU 0-1
OF LOGICAL DOMAIN BY
1 GHz

SP1 — SERVICE PROCESSOR

FIG.11

M1

ADMINIS-
TRATION
DOMAIN

G0

LOGICAL DOMAIN 0

S0

OS

L0-0

LOGICAL CPU
0-0

L0-1

LOGICAL CPU
0-1

G1

LOGICAL DOMAIN 1

S1

OS

L1-0

LOGICAL CPU
1-0

H1

HYPERVISOR

C0

PHYSICAL
CPU 0
FREQUENCY
2GHz

C1

PHYSICAL CPU 1
FREQUENCY 3GHz

SP1

SERVICE PROCESSOR

SHARE EXECUTION TIME OF PHYSICAL
CPU BY RATIO OF 2 TO 1 SO AS TO
RAISE OPERATING SPEED OF LOGICAL
CPU 0-1 BY 1 GHz IN APPEARANCE
WHILE MAINTAINING NORMAL
PERFORMANCE OF LOGICAL CPU 1-0

EP 2 595 056 A1

# FIG.12

■: SERVICE PROCESSOR
□: HYPERVISOR
☆: ADMINISTRATION DOMAIN
★: LOGICAL DOMAIN

S31
★REGULARLY INSPECT LOAD OF OS

S32
★LOAD FLUCTUATION OBSERVED? — NO

YES

S33
★TRANSMIT REQUEST FOR CHANGING FREQUENCY OF LOGICAL CPU TO HV

S34
□REPORT REQUEST TO AD

S35
☆TRANSMIT REQUEST FOR CHANGING FREQUENCY OF PHYSICAL CPU TO HV

S36
☆PHYSICAL CPU TIME-SHARED AND DIVIDED INTO PLURAL LOGICAL CPUs? — NO

YES

S37
☆REVISE TIME-SHARING RATIO OF PHYSICAL CPU

100

FIG.13

EP 2 595 056 A1

CHANGE OPERATING FQ
OF LOGICAL CPU 0-0 TO 1
GHz, AND TERMINATE
LOGICAL CPU 0-1

M1

ADMINIS-
TRATION
DOMAIN

G0

LOGICAL DOMAIN 0

S0

OS

G1

LOGICAL DOMAIN 1

S1

OS

L0-0

LOGICAL CPU
0-0

L0-1

LOGICAL
CPU 0-1

L1-0

LOGICAL CPU
1-0

H1

HYPERVISOR

C0

PHYSICAL
CPU 0
FREQUENCY
2GHz

C1

PHYSICAL CPU 1
FREQUENCY 2GHz

SP1

CHANGE OPERATING FQ
OF LOGICAL CPU 0-0 TO 1
GHz, AND TERMINATE
LOGICAL CPU 0-1 IN
LOGICAL DOMAIN 0

SERVICE PROCESSOR

EP 2 595 056 A1

FIG.14

100

M1
ADMINIS-
TRATION
DOMAIN

G0
LOGICAL DOMAIN 0

S0
OS

L0-0
LOGICAL CPU
0-0

G1
LOGICAL DOMAIN 1

S1
OS

L1-0
LOGICAL CPU
1-0

H1
HYPERVISOR

C0
PHYSICAL CPU
0
FREQUENCY
1GHz

C1
PHYSICAL CPU
1
FREQUENCY
1GHz

SP1
SERVICE PROCESSOR

LOWER CLOCK FQ OF
PHYSICAL CPU TO 1 GHz,
AND CANCEL ALLOCATION
FROM LOGICAL DOMAIN 0

**EP 2 595 056 A1**

<table>
<tr><td colspan="2" align="center"><strong>INTERNATIONAL SEARCH REPORT</strong></td><td colspan="2">International application No.<br>PCT/JP2010/061842</td></tr>
</table>

**A. CLASSIFICATION OF SUBJECT MATTER**
*G06F9/46*(2006.01)i, *G06F9/50*(2006.01)i

According to International Patent Classification (IPC) or to both national classification and IPC

**B. FIELDS SEARCHED**

Minimum documentation searched (classification system followed by classification symbols)
G06F9/46, G06F9/50

Documentation searched other than minimum documentation to the extent that such documents are included in the fields searched
Jitsuyo Shinan Koho 1922–1996  Jitsuyo Shinan Toroku Koho 1996–2010
Kokai Jitsuyo Shinan Koho 1971–2010  Toroku Jitsuyo Shinan Koho 1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-140157 A (Hitachi, Ltd.),<br>25 June 2009 (25.06.2009),<br>paragraphs [0061] to [0096]; fig. 7 to 12<br>& US 2009/0150896 A1 & EP 2071458 A1 | 1-12 |
| A | WO 2009/037731 A1 (Fujitsu Ltd.),<br>26 March 2009 (26.03.2009),<br>paragraph [0007]<br>& EP 2202638 A1 | 1-12 |
| A | JP 2009-175788 A (Hitachi, Ltd.),<br>06 August 2009 (06.08.2009),<br>paragraphs [0032] to [0229]; fig. 1 to 19<br>& US 2009/0187776 A1 | 1-12 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>26 August, 2010 (26.08.10) | Date of mailing of the international search report<br>07 September, 2010 (07.09.10) |
|---|---|
| Name and mailing address of the ISA/<br>Japanese Patent Office | Authorized officer |
| Facsimile No. | Telephone No. |

Form PCT/ISA/210 (second sheet) (July 2009)

29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006344162 A
- JP 2004192612 A
- JP 2003337713 A
- JP 2009140157 A

**Non-patent literature cited in the description**

- **CHIEN-HUA YEN.** SOLARIS (TM) OPERATING SYSTEM, HARDWARE VIRTUALIZATION PRODUCT ARCHITECTURE. *ISV Engineering,* November 2007, http://www.sun.com/blueprints/1107/820-3703.pdf